# FASCICULE DE BREVET EUROPEEN

(11) **EP 1 197 707 B1**
(45) Date de publication et mention de la délivrance du brevet: **09.11.2005**
(21) Numéro de dépôt: 01402620.7
(22) Date de dépôt: 10.10.2001
(51) Int. Cl.: F23J 13/04, F16L 25/08

(54) **Ensemble de deux conduits de gaz chauds raccordés au moyen d'un coupleur et procédé de raccordement**
Mit einem Zwischenstück angeschlossene Rohrstücke und Verbindungsverfahren
Assembly comprising two hot gas pipes connected with a connection pipe and connecting process

(30) Priorité: 11.10.2000 FR 0013029
(43) Date de publication de la demande: 17.04.2002
(73) Titulaire: ETABLISSEMENTS POUJOULAT, 79360 Granzay Gript (FR)
(72) Inventeur: Coirier, Yves, 92380 Garches (FR)
(74) Mandataire: Michelet, Alain

(56) Documents cités:
- EP-A- 0 546 893
- EP-A- 0 607 623
- DE-U- 9 403 326
- DE-U- 29 502 369
- FR-A- 1 272 178
- FR-A- 1 592 874
- US-A- 4 304 424
- US-A- 5 887 909

## Description

L'invention concerne un ensemble de deux conduits de gaz chauds raccordés au moyen d'un coupleur et un procédé de raccordement de deux conduits. Un tel ensemble est connu de l'état de la technique (cf. US 5 887 909 A).

Lors de l'installation d'un générateur thermique, par exemple une chaudière, sa sortie de gaz chauds peut être raccordé de différentes manières à une cheminée: elle peut être raccordée au moyen de conduits rigides, de conduits flexibles, de conduits droits, de conduits coudés et au moyen de toute combinaison de tels conduits.

Citons à titre d'exemple, le raccordement d'une buse de sortie d'une chaudière, qui est comparable à un conduit rigide droit, à un conduit flexible ou rigide constituant le tubage d'une cheminée.

Quel que soit le type de raccord ou la combinaison de conduits raccordés, la qualité de ces raccords risque d'être entravée, entre autres, par la présence de condensation sur le corps du générateur thermique et par des fuites de gaz chauds.

Les raccordements utilisés jusqu'à maintenant vont d'un emboîtement simple sans étanchéité particulière et sans maintien mécanique jusqu'à un emboîtement avec maintien mécanique par un collier ou par des moyens tels que des vis de blocage traversant à la fois la buse et le conduit raccordé. Pour le raccordement de conduits flexibles on utilise, par exemple, des colliers écrasant les spires ou un joint ayant la forme des spires d'un côté et une face plate et lisse de l'autre. Et pour l'emmanchement de deux conduits rigides l'un dans l'autre avec maintien mécanique on utilise des vis traversant les conduits.

Aucun des raccords utilisés jusqu'à maintenant peut être considéré comme satisfaisant en ce qui concerne l'étanchéité aux gaz ou la protection contre la condensation. Si l'un ou l'autre de ceux-ci semble acceptable à cet égard, il s'avère cependant comme laborieux ou comme rendant le positionnement des conduits difficile.

Le but de l'invention est de remédier aux inconvénients exposés ci-avant en proposant une solution permettant d'obtenir un raccord fiable et durable eu égard à l'étanchéité et à la condensation et qui soit facile à mettre en place.

Le but de l'invention est atteint par un ensemble de deux conduits de gaz chauds raccordés au moyen d'un coupleur. Chacun des deux conduits peut être indifféremment de type rigide ou flexible.

Conformément à l'invention, le coupleur utilisé pour cet ensemble comprend une première partie cylindrique et une seconde partie cylindrique reliées l'une à l'autre, dans le sens axial du coupleur, par une partie intermédiaire, la première partie recevant, par emmanchement, un des deux conduits; au moins la première partie cylindrique est pourvue d'un renflement annulaire délimitant avec le conduit un volume annulaire rempli d'un matériau assurant l'étanchéité entre le coupleur et le conduit; et cette première partie cylindrique est également pourvue de moyens de fixation assurant une fixation axiale du coupleur par rapport au conduit au niveau du renflement.

Le coupleur est constitué essentiellement par un élément tubulaire métallique ou plastique dont la division en deux parties cylindriques sert à adapter l'une et l'autre de ses deux extrémités au type des conduits à raccorder et au type de fixation. Les conduits peuvent être flexibles ou rigides, et les fixations peuvent être démontables ou non.

La première partie cylindrique est conçue de façon à recevoir le conduit correspondant par emmanchement. Ce conduit est donc emmanché dans la première partie cylindrique.

La partie intermédiaire du coupleur exerce la double fonction d'adaptateur de diamètre entre les deux parties cylindriques du coupleur et d'embout pour le positionnement du coupleur et des conduits à raccorder, les uns par rapport aux autres.

La seconde partie cylindrique est conçue selon le type du conduit à raccorder et selon le type de fixation.

La première partie cylindrique est pourvue d'un renflement annulaire principalement destiné à loger un matériau assurant l'étanchéité entre cette partie du coupleur et le conduit emmanché. En même temps, ce renflement sert à loger des moyens de fixation assurant une fixation axiale du coupleur par rapport au conduit au niveau du renflement. Dans la plupart des réalisations de l'invention, ces moyens de fixation comprennent une (ou plusieurs) vis de blocage. Cette vis (ou chacune de ces vis) est introduite dans un écrou brasé ou soudé sur le renflement ou emprunte un pas de vis d'un trou fileté pratiqué dans la matière du renflement et donc dans la matière du coupleur.

Pour mettre pleinement à profit les avantages de la présente invention, le matériau assurant l'étanchéité et les moyens de fixation axiale sont constitués ensemble par un joint d'étanchéité obtenu par injection d'un matériau durcissant tel qu'un silicone ou un mastic réfractaire, dans le volume annulaire délimité par le renflement et le conduit. Ce mode de réalisation rend l'utilisation de vis de blocage facultative.

Afin de pouvoir injecter le matériau formant un joint, le renflement est pourvu d'au moins une ouverture. Cette ouverture, ou chacune des ces ouvertures, doit être obturée après l'injection du matériau afin que le matériau ne puisse couler ou se dilater vers l'extérieur. Les moyens d'obturation à prévoir à cet effet peuvent être constitués par autant de bouchons plastiques qu'il y a d'ouvertures.

Lorsque le coupleur est conçu de façon à être fixé axialement par une ou plusieurs vis de blocage, on injecte le matériau formant joint d'étanchéité avantageusement par le (ou les) trou(s) fileté(s) ou écrou(s) dans le(s)quel(s) la vis doit être placée et on obture cette ouverture (ou chacune de ces ouvertures) ensuite par une vis.

La seconde partie cylindrique du coupleur est conçue de différentes façons, selon le type de conduit à raccorder et selon le type de fixation. Les principales façons sont les suivantes:
- le diamètre extérieur de la seconde partie cylindrique est choisi tel que cette partie puisse être emmanchée dans un conduit rigide; cette disposition permet plus particulièrement d'éviter que de l'eau de condensation se forme à l'extérieur du conduit rigide ou ruisselle du conduit emmanché dans la première partie vers l'extérieur du conduit rigide;
- la seconde partie cylindrique est pourvue d'une survirole cylindrique coiffant le conduit rigide dans lequel le coupleur est emmanchée; la survirole comporte un renflement annulaire et des moyens de fixation semblables à ceux de la première partie cylindrique, assurant une fixation axiale de la seconde partie cylindrique par rapport au conduit; l'utilisation d'un joint d'étanchéité obtenu par injection d'une matière durcissable rend le raccord indémontable;
- en variante de la façon ci-avant, le joint d'étanchéité est constitué par une matière compressible; dans cette variante, le raccord est démontable;
- selon une autre variante, les moyens de fixation comprennent un collier de serrage; dans cette variante, le raccord est également démontable;
- le diamètre intérieur de la seconde partie cylindrique est choisi de façon que cette partie puisse recevoir, par emmanchement, un conduit flexible ou rigide; cette disposition rend nécessaire de pourvoir la seconde partie d'un renflement annulaire délimitant avec le conduit un volume annulaire destiné à être rempli d'un matériau assurant l'étanchéité entre le coupleur et le conduit;
- lorsque la seconde partie cylindrique est conçue pour recevoir un conduit rigide, le diamètre intérieur de cette partie cylindrique est choisi suffisamment grand pour que le matériau injectable formant joint d'étanchéité puisse se répandre entre le coupleur et le conduit au-delà du renflement annulaire.

L'invention concerne également les caractéristiques ci-après, considérées isolément ou selon toutes leurs combinaisons techniquement possibles:
- la partie intermédiaire du coupleur a une forme tronconique lorsque le coupleur est formé pour raccorder deux conduits de même type, mais de diamètre différent,
- la partie intermédiaire a une forme tronconique lorsque le coupleur est formé pour raccorder deux conduits de type différent.

Le but de l'invention est également atteint par un procédé de raccordement de deux conduits de gaz chauds au moyen d'un coupleur ayant une première partie cylindrique et une seconde partie cylindrique reliées l'une à l'autre, dans le sens axial du coupleur, par une partie intermédiaire, l'une au moins des deux parties cylindriques étant pourvue d'un renflement annulaire.

Conformément à l'invention, ce procédé comprend les étapes de
- raccorder les deux conduits, par emmanchement, aux parties cylindriques du coupleur, et
- remplir le renflement annulaire avec un matériau assurant l'étanchéité entre le coupleur et le conduit raccordé,
- attendre le durcissement dudit matériau.

Selon des modes de mise en oeuvre avantageux du procédé:
- on remplit le renflement annulaire par injection,
- lorsque le renflement annulaire est rempli, on obture l'ouverture ou les ouvertures du renflement par laquelle ou lesquelles le matériau a été injecté;
- on place des vis de blocage radialement dans le renflement annulaire, lorsque le joint d'étanchéité s'est formé.

D'autres caractéristiques et avantages de l'invention ressortiront de la description ci-après de quelques raccordements représentés dans les dessins annexés. Dans ces dessins:
La Figure 1 montre un ensemble de conduits raccordés au moyen d'un coupleur selon l'invention, en une vue latérale.
La Figure 2 montre un ensemble de conduits raccordés au moyen d'une variante du coupleur de la Figure 1, en une vue latérale.
Les Figures 3 et 4 montrent les ensembles respectivement de la Figure 1 et de la Figure 2 en une coupe axiale.
La Figure 5 montre l'ensemble de la Figure 2 avec une vis de blocage et un joint d'étanchéité compressible dans la seconde partie du coupleur.
La Figure 6 montre l'ensemble de la Figure 2 avec deux vis de blocage et un joint d'étanchéité obtenu par injection dans la seconde partie du coupleur.
La Figure 7 montre le raccordement de deux conduits flexibles au moyen d'un coupleur ne tombant pas sous l'étendue de protection de l'invention.
Les Figures 8 et 9 montrent le raccordement d'un tubage rigide à une buse de sortie au moyen d'un coupleur avec deux types différents de joints d'étanchéité entre la seconde partie cylindrique du coupleur et la buse de sortie.
La Figure 10 montre le raccordement d'un conduit souple à une buse de sortie, au moyen d'un coupleur équipé d'un collecteur de condensat.
La Figure 11 montre le raccordement de deux conduits rigides au moyen d'un coupleur selon l'invention.
Les Figures 12 et 13 montrent le raccordement d'un conduit flexible à une buse de sortie avec fixation mécanique à l'aide d'un collier de serrage attaché au coupleur selon deux façons différentes.
La Figure 14 montre un coupleur selon l'invention dans sa configuration de base.

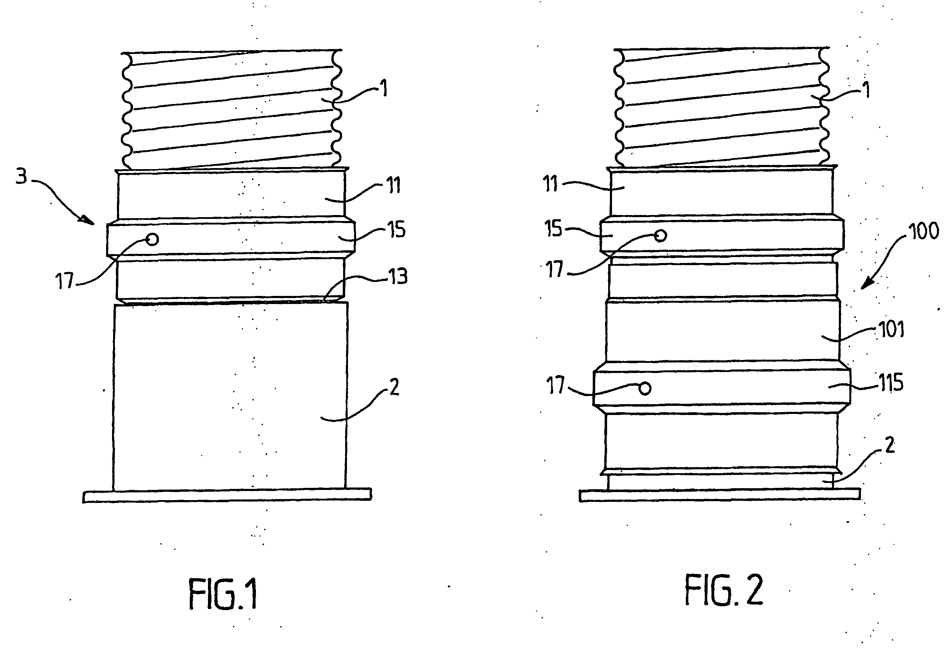

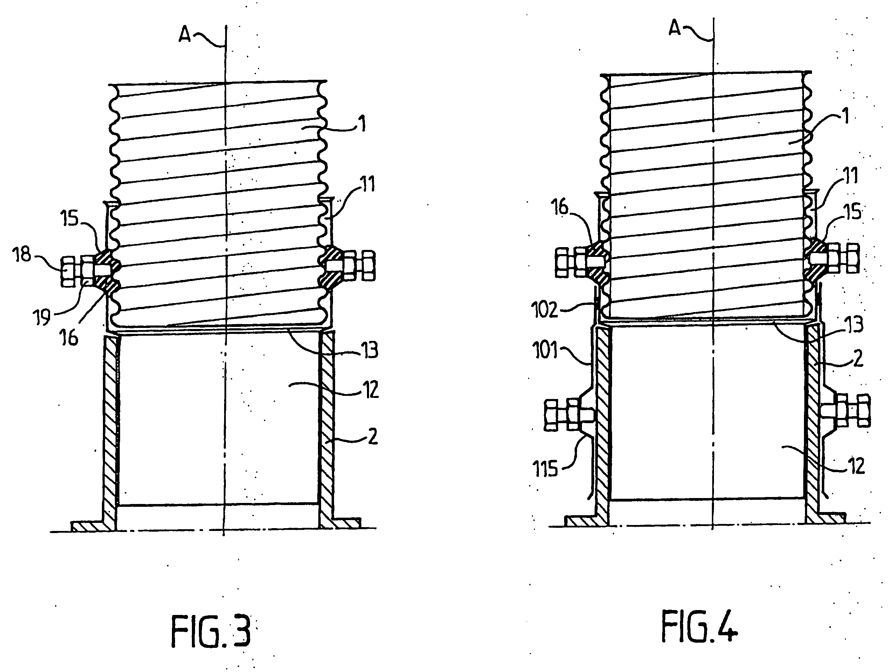

Dans sa configuration de base, représentée sur les Figures 1 et 3, l'ensemble de deux conduits de gaz chauds raccordés par un coupleur comprend un premier conduit flexible 1, un second conduit métallique rigide 2 et un coupleur 3. Le coupleur 3 a deux parties cylindriques 11, 12 reliées l'une à l'autre, dans le sens axial du coupleur, par une partie intermédiaire tronconique 13.

La première partie cylindrique 11 est pourvue d'un renflement annulaire 15 servant à délimiter avec le conduit 1, lorsque le coupleur est mis en place, un volume principalement destiné à être rempli avec un matériau formant un joint d'étanchéité 16. Telle que cela est représenté sur les figures, la première partie cylindrique 11 est la partie supérieure du coupleur, lorsque celui-ci est dans sa position de service.

Le joint d'étanchéité 16 remplit une double fonction. Tout d'abord, il sert à rendre le raccordement étanche. A cet effet, le joint se présente sous la forme d'un matériau injectable tel que du silicone ou du mastic réfractaire. Ce matériau est choisi en fonction de la température des gaz. Le joint est obtenu par injection dudit matériau, lorsque le coupleur est en place, dans le renflement annulaire 15 par une ou plusieurs ouvertures 17 pratiquées dans le renflement. Après injection, le matériau durcit.

La fonction secondaire du joint d'étanchéité 16 est celle d'un moyen de fixation du coupleur sur le conduit raccordé. Puisque le matériau injectable formant joint d'étanchéité durcit après injection, avec une faible élasticité restante, le joint constitue en même temps une liaison ferme entre le coupleur et le conduit correspondant, à l'image d'une liaison collée.

Avantageusement, mais non nécessairement, le coupleur 3 comprend des vis de blocage 18. Ces vis de blocage sont placées radialement dans le renflement annulaire 15, après formation du joint d'étanchéité 16, et sont vissées dans un écrou 19 brasé ou soudé sur le renflement annulaire 15 ou empruntent le pas de vis d'un trou fileté pratiqué dans la matière du coupleur 1. Ce trou fileté est avantageusement l'ouverture 17 servant à l'injection du matériau formant joint d'étanchéité.

Dans la position de service du coupleur, représentée par exemple sur les Figures 1 et 14, la partie cylindrique 12 est la partie inférieure du coupleur.

Le coupleur 3 est réalisé en métal ou en matière plastique, selon la température des gaz et la condensation qui découlent de leur combustion.

Le coupleur 100, représentée par exemple sur les Figures 2 et 4, comporte tous les éléments du coupleur 3. Les mêmes éléments sont désignés par les mêmes numéros de référence.

Le coupleur 100 comporte en plus de ces éléments, une survirole 101 disposée coaxialement par rapport à la seconde partie cylindrique 12 et attachée à la première partie cylindrique 11 par une soudure ou un collage 102.

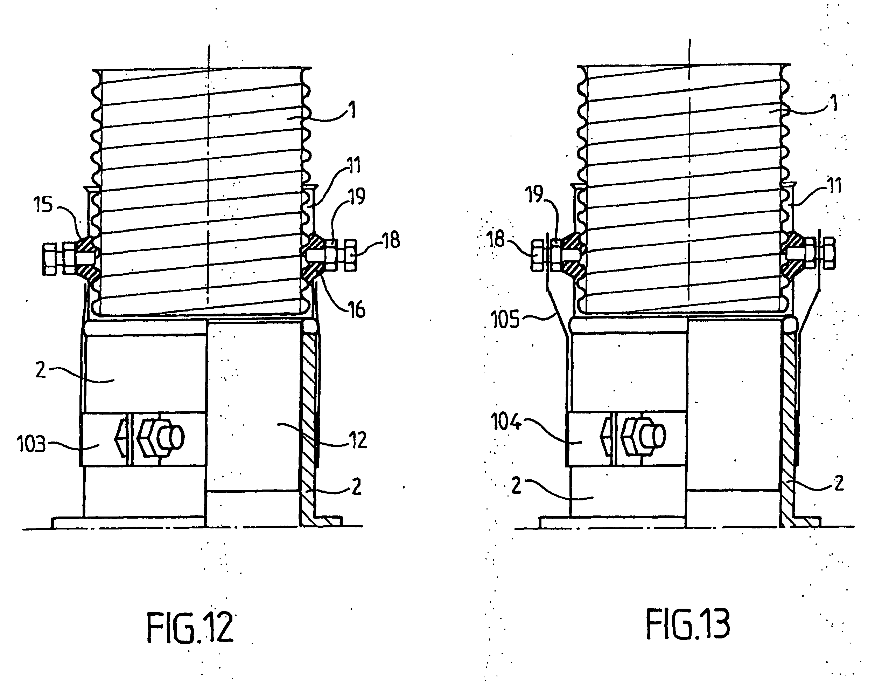

Selon une variante représentée sur la Figure 12, la survirole 101 est remplacée par un collier de serrage 103. Ce collier est attaché à la première partie cylindrique 11, comme la survirole 101, par une soudure ou un collage. Selon une autre variante représentée sur la Figure 13, la survirole est remplacée par un collier de serrage 104 fixé sur la première partie cylindrique 11 par la ou les vis 18.

La survirole 101 et le collier de serrage 103, 104 ayant pour fonction uniquement d'assurer une fixation mécanique axiale du coupleur par rapport au conduit raccordé, la description de l'invention est faite ci-après sans tenir compte de la présence éventuelle de l'un ou de l'autre de ces éléments.

Les parties cylindriques 11 et 12 du coupleur sont formées de façon à pouvoir être liées, par emmanchement, au conduit correspondant des deux conduits qui sont à raccorder.

Selon l'exemple représenté sur la Figure 3, un conduit flexible spiralé 1 est raccordé à un conduit rigide 2, par exemple une buse de sortie d'une chaudière. La buse de sortie 2 est réalisée en fonte d'acier.

Le diamètre intérieur de la partie cylindrique 11 est choisi de façon à pouvoir recevoir, par emmanchement, le conduit flexible 1. Contrairement à cela, le diamètre extérieur de la partie cylindrique 12 est choisi de façon que le coupleur puisse être emmanchée dans le conduit 2.

Les parties cylindriques 11 et 12 sont reliées l'une à l'autre, dans le sens de l'axe A du coupleur, par une partie intermédiaire 13 tronconique dont la plus grande de ses deux extrémités est orientée vers la partie 11, l'autre extrémité étant alors orientée vers la partie 12. Cette forme et la disposition de la partie intermédiaire 13 servent tout d'abord à adapter les diamètres respectifs des deux parties cylindriques 11 et 12, l'un à l'autre. De plus, la partie intermédiaire 13 constitue, par ses surfaces intérieure et extérieure respectives, des faces d'appui aux conduits 1 et 2. La partie intermédiaire 13 remplit ainsi une fonction d'embout facilitant le positionnement du coupleur par rapport à la jonction entre les deux conduits 1 et 2 à raccorder: Le conduit 1 s'appui sur la face intérieure de la partie 13 et le coupleur 3 s'appui, avec la face extérieure de la partie 13, sur le conduit 2.

Selon des considérations purement géométriques, il semble possible d'utiliser le coupleur aussi en sens inverse, par rapport au sens représenté sur la Figure 3. Il semble alors possible, à première vue, d'introduire la partie cylindrique 12 dans le conduit 1 et de recevoir le conduit 2 dans la partie cylindrique 11 dont le diamètre intérieur est plus grand que celui de la partie 12.

Cependant, pour obtenir le résultat escompté de l'invention, il est important d'utiliser le coupleur toujours de la façon représentée: le conduit supérieur doit être emmanché dans la première partie cylindrique du coupleur pour collecter des condensats éventuels à la manière d'un entonnoir. La seconde partie cylindrique de la plupart des variantes du coupleur étant formées avec un diamètre extérieur tel que cette seconde partie puisse être emmanchée dans le conduit inférieur, le principe de l'entonnoir est confirmé.

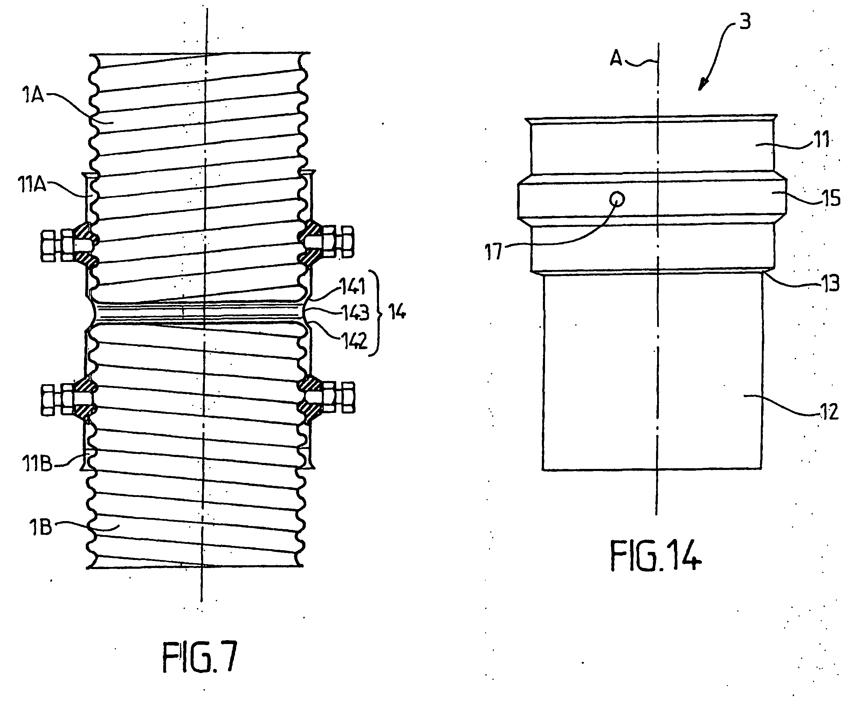

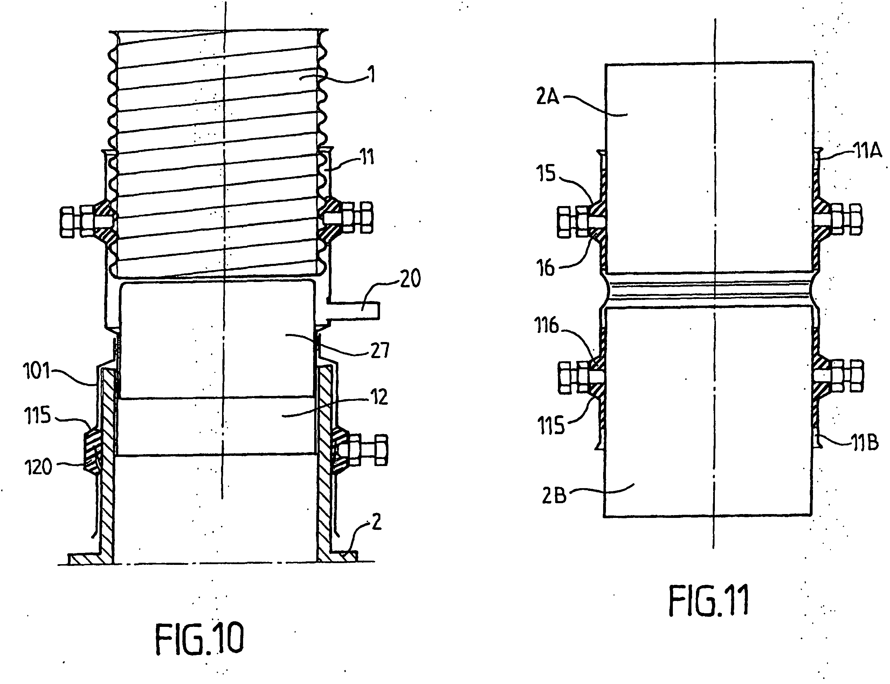

Pour les deux applications représentées sur les Figures 7 et 11, c'est-à-dire pour le raccordement de deux conduits de même type, la mise en place d'un joint détanchéité s'impose. Ce joint est obtenu par injection lorsque le conduit inférieur est flexible. Lorsque le conduit inférieur est rigide, le joint est avantageusement obtenu par injection; mais, en variante, il peut également être constitué par un joint compressible.

Il s'ensuit pour le cas particulier représenté sur la Figure 7 (mode de réalisation ne tombant pas sous l'étendue de protection de l'invention), c'est-à-dire pour un raccordement de deux conduits flexibles, que les deux parties cylindriques du coupleur doivent avoir un diamètre intérieur suffisamment grand pour que l'on puisse emmancher chacun des deux conduits flexibles dans la partie cylindrique correspondante.

La Figure 7 montre un coupleur ayant deux parties cylindriques 11A et 11B de même diamètre intérieur pour recevoir, chacun, un conduit flexible 1A ou 1B de même diamètre.

En variante de la disposition représentée sur la Figure 7, le coupleur peut avoir deux parties cylindriques de diamètre intérieur différent pour recevoir des conduits flexibles ayant des diamètres différents.

Pour conserver à la partie intermédiaire du coupleur la double fonction de liaison entre les deux parties cylindriques, et d'embout pour le positionnement du coupleur par rapport à la jonction des deux conduits à raccorder, la partie intermédiaire du coupleur représentée sur la Figure 7, référencée 14, a une forme différente de celle précédemment décrite.

En effet, la partie intermédiaire 14 a la forme d'une gorge annulaire ou circonférentielle, ouverte vers l'extérieur et entourant le corps du coupleur. La gorge 14 a avantageusement une section arrondie. Mais elle peut également avoir une forme composée de deux parties tronconiques 141, 142, axialement reliées l'une à l'autre par une partie cylindrique 143 interposée.

De manière unique, pour toute réalisation d'un raccord entre un conduit flexible et la première partie cylindrique du coupleur, tel que représenté sur les Figures 1 à 7, 10, 12 et 13, afin de rendre le raccord étanche, on procède de la manière suivante lors du raccordement. Lorsque le coupleur est en place, c'est-à-dire après avoir introduit le conduit flexible dans le coupleur, un silicone ou un mastic réfractaire est injecté dans le volume formé entre le renflement annulaire 15 et la paroi extérieure du conduit 1. Le choix de la matière à injecter pour former un joint d'étanchéité est fait principalement en fonction de la température des gaz.

Après injection de la matière formant joint d'étanchéité, deux vis de blocage 18 sont vissées dans des ouvertures 17 ou des écrous 19 prévus à cet effet dans le renflement annulaire 15. Les vis obturent ainsi les ouvertures d'injection. Etant donné que le joint d'étanchéité présente une certaine rigidité mécanique qui lui permet de coopérer avec les vis de blocage, les vis de blocage n'ont pas besoin d'être vissées jusqu'à appui sur le conduit ni de s'introduire dans la paroi du conduit pour assurer une stabilisation mécanique axiale du coupleur par rapport au conduit.

Grâce à la structure spiralée du conduit flexible, la largeur du joint d'étanchéité peut être limitée à la largeur, considérée dans le sens axial du coupleur, du renflement annulaire 15. Cette largeur correspond en général à deux ou trois spires de la structure spiralée du conduit flexible.

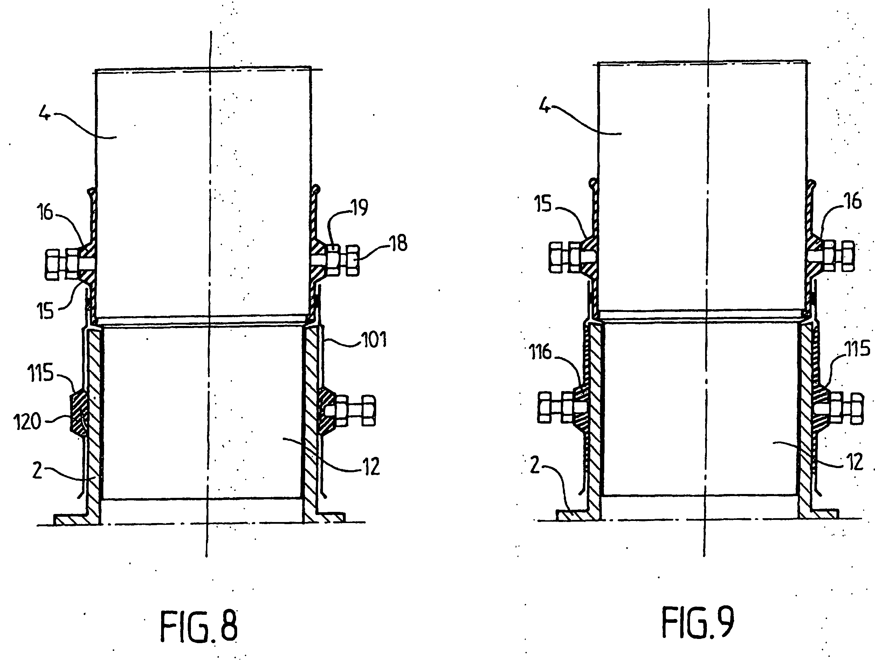

Contrairement à cela, lorsqu'il s'agit de raccorder la première partie du coupleur à un conduit rigide, tel que cela est représenté par exemple sur les Figures 8 et 9, ou, de manière plus générale, lorsqu'il s'agit de raccorder un conduit ayant une surface essentiellement lisse au coupleur selon l'invention, il est préférable que le matériau destiné à former le joint d'étanchéité soit injecté en une quantité telle qu'il puisse se répandre au-delà du renflement annulaire 15, c'est-à-dire pratiquement dans le volume entier délimité par la partie cylindrique correspondante du coupleur et la paroi du conduit. La Figure 9 représente cela pour l'exemple d'un raccordement d'un tubage rigide 4.

Lorsque le raccordement est fait au moyen d'un coupleur 100 comportant une survirole 101, les moyens de fixation et la façon de fixer la première partie sur le conduit supérieur sont les mêmes que ceux décrits jusqu'à maintenant. Et les moyens de fixation et la façon de fixer la seconde partie, plus précisément: la survirole, sur le conduit inférieur sont similaires aux moyens et à la façon décrits ci-avant.

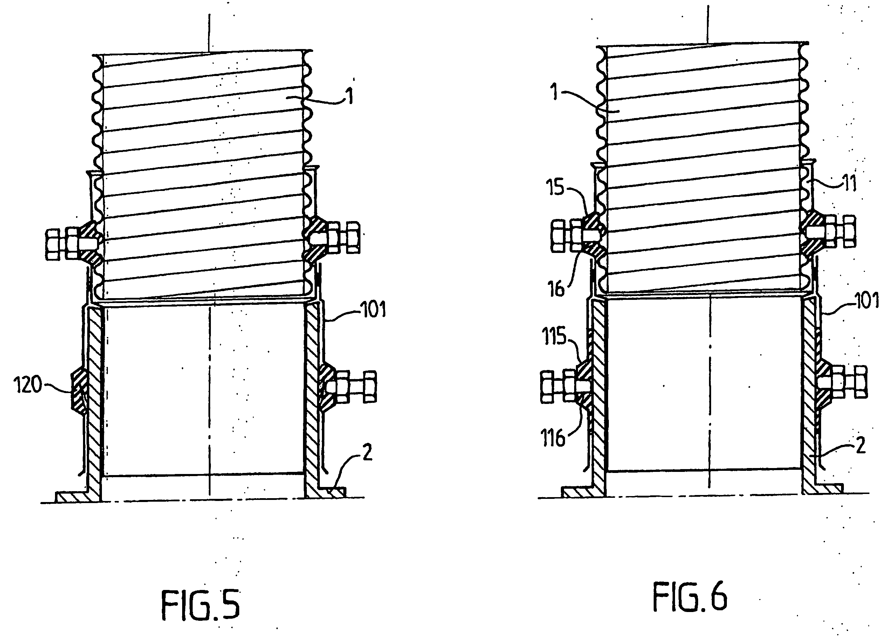

Ainsi, lorsqu'il s'agit de raccorder un conduit flexible 1, au moyen d'un coupleur 100, à un conduit rigide 2, comme cela est représenté sur la Figure 6, la matière formant le joint d'étanchéité est injectée dans le volume entre le renflement annulaire 15 de la partie cylindrique 11 et le conduit flexible 1, d'une part, et dans la volume entre le renflement 115 et le conduit 2, d'autre part. La quantité injectée dans le premier volume est déterminée de façon à obtenir un joint 16 s'étendant approximativement sur une largeur, mesurée dans le sens axial du coupleur, qui correspond à la largeur du renflement annulaire 15. Contrairement à cela, la quantité injectée dans le second volume est déterminée de façon à obtenir un joint 116 s'épendant au-delà du volume du renflement annulaire 115.

Lorsque les joints d'étanchéité 16 et 116 sont formés, des vis de blocage 18 sont placées dans chacun des renflements pour obturer les ouvertures d'injection et sont vissées dans le joint correspondant lorsque les joints sont durcis.

Selon une variante représentée sur la Figure 5, la formation *in situ* d'un joint d'étanchéité par injection d'une matière appropriée peut être remplacée par la mise en place d'un joint 120 en une matière compressible, avantageusement en silicone. Toutefois, cette option est limitée au raccordement de la seconde partie cylindrique à un conduit et aux cas d'un raccordement démontable.

Si l'on utilise cette variante de l'invention, il est souvent suffisant de disposer une seule vis de blocage.

Le coupleur de l'invention peut être utilisé par ailleurs également lorsqu'il s'agit de raccorder deux conduits l'un à l'autre en interposant une virole 27 pour la retenue de condensat, comme cela est représenté sur la Figure 10. Pour cette application, on utilise un coupleur 100 dont la partie cylindrique 11 est pourvue d'un tube 20 sortant radialement pour l'évacuation des condensats. La fixation du tube flexible 1 et la fixation du conduit rigide 2 sont faits par les éléments et de la façon décrits plus haut, par exemple en référence à la Figure 5.

Les coupleurs pourvus d'une survirole décrits jusqu'à maintenant sont représentés dans les dessins dans un mode de réalisation selon lequel la survirole est soudée ou brasée sur la partie cylindrique 11 du coupleur, c'est-à-dire sur l'autre partie cylindrique par rapport à celle à laquelle elles sont disposées coaxialement. Ce mode de fixation est également choisi pour le coupleur pourvue d'un collier de serrage 103, représenté sur la Figure 12.

Selon une variante, le coupleur représentée sur la Figure 13 comporte un collier de serrage 104 pourvu de deux pattes de maintien 105 vissées sur la première partie cylindrique 11 du coupleur par les vis de blocage 18.

Les différents modes de réalisation et variantes du coupleur selon l'invention peuvent être choisis selon les nécessités de démonter ou non le raccordement obtenu.

## Revendications

1. Ensemble comprenant un premier conduit (1) un second conduit (2) et un coupleur (3, 100) pour raccorder le long d'un axe vertical des premier et second conduits destinés à l'évacuation des gaz chauds d'une chaudière, ledit premier conduit étant un conduit flexible et ledit second conduit étant une buse métallique rigide de sortie de ladite chaudière, comportant une première partie cylindrique (11) coaxiale audit axe vertical, apte à recevoir intérieurement par emmanchement ledit premier conduit, et une seconde partie cylindrique (12) coaxiale audit axe vertical, apte à recevoir extérieurement par emmanchement ledit second conduit, lesdites première et seconde parties cylindriques étant reliées l'une à l'autre dans le sens axial par une partie intermédiaire tronconique (13) d'adaptation de diamètre, et comportant un unique renflement annulaire (15) disposé sur ladite première partie cylindrique et faisant saillie radialement vers l'extérieur, ledit renflement comportant au moins une ouverture (17), de sorte qu'en position assemblée dudit premier conduit à l'intérieur dudit coupleur, ledit renflement délimite avec ledit premier conduit un volume annulaire destiné à recevoir un matériau (16; 120) adapté aux températures élevées injecté au travers de ladite ouverture, assurant l'étanchéité entre le coupleur et le premier conduit ainsi que le maintien de ces derniers.

2. Ensemble selon la revendication 1, **caractérisé en ce** q'il comporte des moyens de fixation additionnels pour maintenir axialement ledit coupleur et ledit premier conduit.

3. Ensemble selon la revendication 2, **caractérisé en ce que** lesdits moyens de fixation comportent au moins une vis de blocage (18) disposée radialement à travers ledit renflement annulaire (15).

4. Ensemble selon l'une quelconque des revendications 1 à 3, **caractérisé en ce que** ladite seconde partie cylindrique (12) est pourvue d'une survirole (101) cylindrique pour raccorder ledit coupleur audit second conduit à l'intérieur duquel ladite seconde partie cylindrique (12) est emmanchée.

5. Ensemble selon la revendication 4, **caractérisé en ce que** ladite survirole est fixée à ladite première partie cylindrique.

6. Ensemble selon l'une quelconque des revendications 1 à 3, **caractérisé en ce que** ladite seconde partie cylindrique (12) est pourvue d'un collier de serrage (103) pour raccorder ledit coupleur audit second conduit à l'intérieur duquel ladite seconde partie cylindrique (12) est emmanchée.

7. Ensemble selon la revendication 6, **caractérisé en ce que** ladite survirole est fixée à ladite première partie cylindrique.

8. Ensemble selon l'une des revendications 1 à 7, **caractérisé en ce qu'**il comporte, intérieurement au niveau de ladite partie intermédiaire, une virole (27) destinée à être interposée entre les premier et second conduits pour la retenue de condensat.

9. Ensemble selon la revendication 8, **caractérisé en ce que** ladite première partie cylindrique est pourvue, à proximité de ladite partie intermédiaire, d'un tube (20) sortant radialement pour l'évacuation des condensats.

10. Procédé de raccordement d'un ensemble selon l'une des revendications 1 à 9, pour raccorder le long d'un axe vertical des premier et second conduits destinés à la circulation des gaz chauds d'une cheminée, ledit premier conduit étant une buse métallique de sortie de chaudière et ledit second conduit étant un conduit flexible métallique, qui comporte les étapes consistant à :
- Emmancher ladite seconde partie cylindrique dudit coupleur à l'intérieur dudit second conduit ;
- Emmancher ledit premier conduit à l'intérieur de ladite première partie cylindrique ;
- Injecter un matériau au travers d'une ouverture dont ledit renflement de ladite première partie est muni de manière à remplir ledit volume annulaire ; et,
- Attendre le durcissement dudit matériau de manière à former un joint entre ledit premier conduit et ledit coupleur assurant l'étanchéité entre ces derniers et le couplage axial de ces derniers.

## Patentansprüche

1. Einheit eines ersten Rohrs (1), eines zweiten Rohrs (2) und eines Zwischenstücks (3,100), um entlang einer vertikalen Achse erste und zweite Rohre zum Abführen von Heizgasen eines Kessels zu verbinden, wobei das erste Rohr ein flexibles Rohr ist und das zweite Rohr ein starrer metallischer Ausgangsstutzen des Heizkessels ist, das einen ersten zylindrischen Abschnitt (11) koaxial zu der vertikalen Achse hat, der geeignet ist, das erste Rohr innen durch Einstecken aufzunehmen, und einen zweiten zylindrischen Abschnitt (12) koaxial zu der vertikalen Achse hat, der geeignet ist, außen durch Aufstecken das zweite Rohr aufzunehmen, wobei die ersten und zweiten zylindrischen Abschnitte miteinander in axialer Richtung durch einen kegelstumpfförmigen Zwischenabschnitt (13) der Durchmesseranpassung verbunden sind, und eine einzigartige ringförmige Verdickung (15) hat, die auf dem ersten zylindrischen Abschnitt angeordnet ist und radial nach außen vorspringt, wobei die Verdickung wenigstens eine Öffnung (17) derart aufweist, daß im montierten Zustand des ersten Rohrs an dem Inneren des Zwischenstücks die Verdickung mit dem ersten Rohr ein ringförmiges Volumen begrenzt, welches dazu bestimmt ist, ein für hohe Temperaturen geeignetes Material (16; 120) aufzunehmen, welches durch die Öffnung injiziert ist, um die Dichtheit zwischen dem Zwischenstück und dem ersten Rohr sowie die Haltung zwischen letzteren zu gewährleisten.

2. Einheit nach Anspruch 1,
**dadurch gekennzeichnet,**
**daß** sie zusätzliche Befestigungsmittel zum axialen Halten des Verbindungsstücks und des ersten Rohrs aufweist.

3. Einheit nach Anspruch 2,
**dadurch gekennzeichnet,**
**daß** die Befestigungsmittel wenigstens eine Klemmschraube (18) umfassen, die radial durch die ringförmige Verstärkung (15) hindurchreicht.

4. Einheit nach einem der Ansprüche 1 bis 3,
**dadurch gekennzeichnet,**
**daß** der zweite zylindrische Abschnitt (12) mit einem zylindrischen Überwurfring (101) versehen ist, um das Zwischenstück mit dem zweiten Rohr zu verbinden, in dessen Inneres der zweite zylindrische Abschnitt (12) eingesteckt ist.

5. Einheit nach Anspruch 4,
**dadurch gekennzeichnet,**
**daß** der Überwurfring an dem ersten zylindrischen Abschnitt angebracht ist.

6. Einheit nach einem der Ansprüche 1 bis 3,
**dadurch gekennzeichnet,**
**daß** der zweite zylindrische Abschnitt (12) mit einer Klemmschelle (103) versehen ist, um das Zwischenstück mit dem zweiten Rohr zu verbinden, in dessen Inneres der zweite zylindrische Abschnitt (12)gesteckt ist.

7. Einheit nach Anspruch 6,
**dadurch gekennzeichnet,**
**daß** der Überwurfring an dem ersten zylindrischen Abschnitt angebracht ist.

8. Einheit nach einem der Ansprüche 1 bis 7,
**dadurch gekennzeichnet,**
**daß** sie innen in Höhe des Zwischenabschnitts einen Ring (27) umfaßt, der zum Zurückhalten von Kondensat zwischen dem ersten und dem zweiten Rohr bestimmt ist.

9. Einheit nach Anspruch 8,
**dadurch gekennzeichnet,**
**daß** der erste zylindrische Abschnitt in der Nähe des Zwischenabschnitts mit einer Röhre (20) versehen ist, die zum Entfernen von Kondensat radial austritt.

10. Verbindungsverfahren einer Einheit nach einem der Ansprüche 1 bis 9, um entlang einer vertikalen Achse die ersten und zweiten Rohre zu verbinden, die zum Leiten von Heizgasen eines Kamins bestimmt sind, wobei das erste Rohr ein metallischer Ausgangsstutzen eines Heizkessels ist und das zweite Rohr ein flexibles Metallrohr ist, welches die Schritte umfaßt:
- Einstecken des zweiten zylindrischen Abschnitts des Zwischenstücks in das Innere des zweiten Rohrs,
- Einstecken des ersten Rohrs in das Innere des ersten zylindrischen Abschnitts;
- Injizieren eines Materials durch eine Öffnung, mit der die Verstärkung des ersten Abschnitts versehen ist, derart, daß der ringförmige Raum gefüllt wird, und
- das Härten dieses Materials abwarten, um eine Verbindung zwischen dem ersten Rohr und dem Zwischenstück zu bilden, welche die Dichtung zwischen diesen letzteren und die axiale Verbindung zwischen diesen letzteren sichert.

## Claims

1. An assembly comprising a first duct (1), a second duct (2) and a coupler (3, 100), for connection along a vertical axis of the first and second ducts intended for exhausting the hot gases from a boiler, said first duct being a flexible duct and said second duct being an output rigid metal nozzle of said boiler, comprising a first cylindrical portion (11) coaxial to said vertical axis, capable of receiving internally by shrink-fitting said first duct, and a second cylindrical portion (12) coaxial to said vertical axis, capable of receiving externally by shrink fitting said second duct, said first and second cylindrical portions being connected to one another along the axial direction via a diameter adapting truncated intermediate portion, and comprising a single annular boss (15) arranged on said first cylindrical portion and protruding radially outwardly, said boss including at least one opening (17), so that in assembled position of said first duct inside said coupler, said boss delineates with said first duct, an annular volume intended to receive a material (16; 120) adapted to the high temperatures injected through said opening, for enhanced tightness between the coupler and the first duct as well as the maintenance thereof.

2. An assembly according to claim 1, **characterised in that** it comprises additional attachment means to maintain said coupler and said first duct axially.

3. An assembly according to claim 2, **characterised in that** said attachment means include at least one locking screw (18) arranged radially through said annular boss (15).

4. An assembly according to any of the claims 1 to 3, **characterised in that** said second cylindrical portion (12) is provided with a cylindrical super-ferule (101) for connecting said coupler to said second duct inside which said second cylindrical portion (12) is shrunk-fitted.

5. An assembly according to claim 4, **characterised in that** said super-ferule is attached to said first cylindrical portion.

6. An assembly according to any of the claims 1 to 3, **characterised in that** said second cylindrical portion (12) is provided with a clamping fitting (103) to connect said coupler to said second duct inside which said second cylindrical portion (12) is shrunk-fitted.

7. An assembly according to claim 6, **characterised in that** said super-ferule is attached to said first cylindrical portion.

8. An assembly according to any of the claims 1 to 7, **characterised in that** it includes, internally at said intermediate portion, a ferule (27) intended to be interposed between the first and second ducts for condensate retention.

9. An assembly according to claim 8, **characterised in that** said first cylindrical portion is provided, close to said intermediate portion, with a tube (20) coming out radially for the evacuation of condensates.

10. A connecting process of an assembly according to any of the claims 1 to 9, or connection along a vertical axis of the first and second ducts intended for circulation of hot gases in a chimney, said first duct being a boiler output metal nozzle and said second duct being a metal flexible duct, comprising the stapes consisting in:
- shrink-fitting said second cylindrical portion of said coupler inside said second duct;
- shrink-fitting said first duct inside said first cylindrical portion;
- injecting a material through an opening wherewith said boss of said first portion is provided so as to fill in said annular volume; and
- waiting for said material to harden so as to form a seal between said first duct and said coupler ensuring tightness therebetween and axial coupling thereof.
